(19) Europäisches Patentamt
European Patent Office
Office européen des brevets

(11) **EP 2 166 327 B1**

(12) **EUROPÄISCHE PATENTSCHRIFT**

(45) Veröffentlichungstag und Bekanntmachung des Hinweises auf die Patenterteilung:
**14.06.2017 Patentblatt 2017/24**

(51) Int Cl.:
*G01K 7/42* *(2006.01)*     *G01K 15/00* *(2006.01)*
*G01K 7/16* *(2006.01)*

(21) Anmeldenummer: **09168466.2**

(22) Anmeldetag: **24.08.2009**

(54) **Verfahren und Vorrichtung zur Detektion einer Kennlinie**

Method and device for detecting a characteristics curve

Procédé et dispositif destinés à la détection d'une ligne de référence

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **18.09.2008 DE 102008047954**

(43) Veröffentlichungstag der Anmeldung:
**24.03.2010 Patentblatt 2010/12**

(73) Patentinhaber: **Techem Energy Services GmbH 65760 Eschborn (DE)**

(72) Erfinder:
• **Kähler, Arne**
  **12683 Berlin (DE)**
• **Ohl, Jochen**
  **64823 Gross-Umstadt (DE)**

(74) Vertreter: **Keil & Schaafhausen Patent- und Rechtsanwälte PartGmbB Friedrichstrasse 2-6 60323 Frankfurt am Main (DE)**

(56) Entgegenhaltungen:
**EP-B1- 1 182 438     WO-A1-2008/035496 US-B1- 6 594 603**

**Beschreibung**

Die Erfindung betrifft ein Verfahren und eine Vorrichtung zur Detektion bzw. Rekonstruktion der Kennlinie eines Messfühlers für zeitlich veränderliche Temperaturmesswerte, insbesondere Widerstandsmesswerte eines Temperaturfühlers, die in Heizungs- oder Klimaanlagen bzw. deren Regelungen verwendet werden. Bei dem Verfahren werden eine Messwertfolge des Messfühlers und eine gleichzeitig gemessene Messwertfolge eines Referenzmessfühlers mit bekannter Kennlinie erfasst und die einzelnen Messwerte des Messfühlers in Relation zu den jeweils entsprechenden Messwerten des Referenzmessfühlers gesetzt, wobei die bekannte Kennlinie Referenzmessfühlers die Beziehung zwischen den Messwerten des Referenzmessfühlers und der gewünschten Größe 'Temperatur' wiedergibt, um aus den korrelierten Messwerten die Kennlinie des Messfühlers zu ermitteln.

Anwendung findet das Verfahren im Rahmen einer Heizungsregelung, bei der eine den tatsächlichen Wärmebedarf eines Gebäudes berücksichtigende Wärmeleistungsadaptionsregelung einer eigentlichen, meist außentemperaturgeführten Heizungsregelung vorgeschaltet wird. Die Wärmeleistungsadaptionsregelung erzeugt einen Korrekturwert für die Vorlauftemperatur, welcher der Heizungsregelung als veränderter Widerstandswert bspw. eines Vorlauftemperaturfühlers mitgeteilt wird. In diesem Fall ist es wichtig, dass die vorgeschaltete Wärmeleistungsadaptionsregelung die Kennlinie des Vorlauftemperaturfühlers (Messfühler) kennt, um daraus eine gesonderte Widerstandskorrekturgröße zu bestimmen, welche der gewünschten Vorlauftemperaturänderung entspricht. Dies ist besonders wichtig, da die Vorlauftemperatur in der Heizungsanlage durch Beeinflussung des Widerstandswerts des Messfühlers definiert beeinflusst, d.h. abgesenkt oder angehoben, werden soll.

Moderne Heizungsregelungen, wie sie beispielsweise in der EP 1 456 727 B1 oder der DE 10 2005 012 597 A1 beschrieben sind, zielen darauf ab, die Vorlauftemperatur der Heizungsanlage entsprechend dem aktuellen Wärmebedarf des Heizkreises oder Gebäudes vorzugeben, der aus Heizkörperventilstellungen oder Temperaturmessungen im Rahmen der Heizwärmeerfassung bestimmt wird. Aufgrund des bekannten Wärmebedarfs kann so eine sinnvolle Heizungsregelung durch Vorgabe oder Korrektur der Vorlauftemperatur erreicht werden. Gerade bei älteren Heizungen besteht jedoch das Problem, dass die Heizungsregler keinen separaten Eingang zur Vorgabe von Korrektursignalen besitzen, so dass es nicht möglich ist, dem Heizungsregler einen Korrekturwert für die angestrebte Vorlauftemperatur mitzuteilen.

Daher ist es häufig nötig, den durch die Heizungsanlage vorgegebenen und eingestellten, d.h. durch einen Messfühler messbaren, Vorlauftemperaturwert und einen Korrekturtemperaturwert zu einem Vorgabetemperaturwert zusammenzufassen und diesen insbesondere in Form eines Widerstandswertes dann der Heizungsregelung vorzugeben. Diese Aufgabe übernimmt häufig die vorgeschaltete Wärmeleistungsadaptionsregelung, welche dazu die Kennlinie des a priori unbekannten Messfühlers der Heizungsanlage ermitteln und eine geeignete Verschiebung des Widerstandswertes durchführen muss. Dies kann durch Einsatz eines Referenzmessfühlers mit bekannter Widerstands-Temperatur-Kennlinie erfolgen, indem die jeweils durch den Referenzmessfühler gemessenen Temperaturwerte mit den gemessenen Widerstandswerten des Messfühlers korreliert werden.

Aus der DE 10 2006 040 409 A1 ist ein Verfahren zum Bestimmen einer Kennlinie einer Fühleranordnung mit einem Messfühler und einem Referenzfühler zur Aufnahme derselben physikalischen Größe bekannt, bei dem im laufenden Messbetrieb ein Kennlinienpunkt aufgenommen wird, wenn die Messwertänderungen im Zeitverlauf des mindestens einen Messfühlers und im Zeitverlauf des mindestens eines Vergleichsfühlers innerhalb eines vorgegebenen Zeitintervalls innerhalb eines vorgegeben Grenzbereichs bleiben.

Die DE 10 2007 033 754 A1 beschreibt eine Temperiervorrichtung mit einer Kalibrierungseinrichtung, wobei zusätzlich zu einem Regeltemperatursensor ein Kalibrierungstemperatursensor vorgesehen ist, der die Temperatur in der Nähe des Regeltemperatursensors misst und zur Kalibrierung an eine Steuereinrichtung übersendet.

In der EP 1 182 438 B1 wird ein Verfahren zum Betrieb einer Temperaturfühlereinrichtung offenbart, bei dem in einer Initialisierungsphase aus der Differenz einer mittels eines Thermoelements ermittelten Temperatur und einer mittels eines Thermowiderstands ermittelten Temperatur ein Korrekturwert ermittelt und addiert wird, so dass die Temperaturen nahezu gleich sind, wobei in nachfolgenden Mess- und Betriebsphasen sowohl die jeweiligen resultierenden Temperaturen als auch deren Abweichungen überwacht werden, um bei einer einen Toleranzbereich übersteigenden Abweichung eine Fehlermeldung zu erzeugen.

In der Praxis hat sich jedoch herausgestellt, dass der Einsatz der Referenzmessfühler in nichtstationären Heizungszuständen, d.h. bei sich insbesondere rasch verändernden Vorlauftemperaturen bzw. Messwerten, wegen unterschiedlicher Ansprechgeschwindigkeiten der Mess- und Referenzfühler beispielsweise aufgrund verschiedener Wärmeankopplung oder verschiedener Materialien nicht immer möglich ist. Nichtstationäre Zustände ergeben sich in Heizungsregelungen jedoch vergleichsweise häufig, da die Vorlauftemperatur bspw. ständig an die Außentemperatur sowie gegebenenfalls den Gebäudewärmebedarf angepasst wird. Vor allem ergeben sich nichtstationäre Zustände aus der Taktung des Brenners der Heizungsanlage und Stellbewegungen des Mischers.

Aufgabe der vorliegenden Erfindung ist es daher, eine Möglichkeit vorzuschlagen, eine Kenndiendetektion bzw. -rekonstruktion eines Messfühlers auch bei nichtstationären Messwertfolgen, d.h. sich mit der Zeit ändernden Messwerten aufgrund eines nichtstationären Zustands des Systems, durchzuführen.

Diese Aufgabe wird erfindungsgemäß mit den Merkmalen der Ansprüche 1 und 8 gelöst.

Dazu wird bei dem vorgeschlagenen Verfahren bei einer nichtstationären Messwertfolge des Referenzmessfühlers und/oder des Messfühlers ein möglicher Zeitversatz bzw. Zeitverzug, respektive eine Phasenverschiebung, zwischen einer Messwertfolge des Messfühlers und einer Messwertfolge des Referenzmessfühlers ermittelt und korrigiert. Dadurch wird zumindest annähernd Phasengleichheit zwischen den nichtstationären Messwertfolgen der verschiedenen Fühler hergestellt, so dass auch diese analog zu dem Fall stationärer Messwerte zur Ermittlung der Kennlinie eines a priori unbekannten Messwertfühlers verwendet werden können. Die rekonstruierte Kennlinie kann somit für eine phasenverzugskorrigierte Ausgabe eines dem aktuellen Wärmebedarf angepassten Widerstandswertes genutzt werden. Die Ermittlung eines Zeitversatzes der gemessenen Widerstandswerte kann erfindungsgemäß in einfacher Weise durch eine Kreuzkovarianz- bzw. Kreuzkorrelationsfunktion erfolgen. Erfindungsgemäß können im Falle stationärer Messwerte bzw. Signalverläufe die Messwerte natürlich unmittelbar und ohne Phasenkorrektur zur Detektion der Kennlinie und/oder zur Widerstandsausgabe herangezogen werden. Daher lässt sich das erfindungsgemäße Verfahren in einfacher Weise im Rahmen einer digitalen oder schaltungselektronischen Messwertfilterung umsetzen, die im Falle stationärer Messwerte bzw. Signalverläufe inaktiv bleibt und im Falle nichtstationärer Messwerte bzw. Signalverläufe den ermittelten Zeitversatz korrigiert. Diese Messwertfilterung wird nachfolgend auch als Dynamikfilter bezeichnet, da Messwertfolgen auf ihr dynamisches Verhalten hin gefiltert werden, wobei gegebenenfalls Korrekturen zur Herstellung der annähernden Phasengleichheit zwischen Messfühlerwert und Referenzmessfühlerwert durchgeführt werden.

Bei dem Einsatz einer Kreuzkovarianz- bzw. Kreuzkorrelationsfunktion der beiden Messwertfolgen lässt sich der Zeitversatz einfach aus der Lage eines Extremums dieser Kreuzkovarianz- bzw. Kreuzkorrelationsfunktion ableiten, die typischerweise eine Funktion der Abtastzeitpunkte ist, zu denen die Messwerte des Messfühlers und des Referenzmessfühlers gewonnen werden. Über die bekannte Abtastfrequenz lässt sich ein festgestellter Versatz dann in einen Zeitversatz umrechnen.

Gemäß einer bevorzugten Ausführungsform der Erfindung wird der ermittelte Zeitversatz zur Korrektur der Phasenverschiebung herangezogen, indem die vorauseilende Messwertfolge entsprechend dieses Zeitversatzes bzw. des Zeitverzugs der langsameren Messwertfolge verzögert wird. Dazu kann der Zeitversatz in einfacher Weise mit einem Koeffizienten multipliziert werden, um eine Zeitkonstante $T_{PT1}$ für einen Verzögerungsfilter zu bilden. Die Anwendung dieser Zeitkonstante $T_{PT1}$ in einem Verzögerungsfilter als Korrekturgröße auf die Messwerte der vorauseilenden Messwertfolge führt dann zur Bildung von Filterwerten der Messwertfolge, die gegenüber den Messwerten zeitlich verzögert sind. Auf diese Weise wird die vorauseilende Messwertfolge insgesamt verzögert. Vorzugsweise wird jeder erfasste, d.h. mit der Abtastfrequenz beispielsweise durch einen Mikroprozessor mit integriertem Analog-Digital-Wandler abgetastete, Messwert gefiltert. Der Verzögerungsfilter kann ein PT1-Filter sein, in dem die Zeitkonstante $T_{PT1}$ das Verzögerungsglied erster Ordnung bildet. Allgemein können beliebige Shift-Operatoren oder Verzögerungsfilter höherer Ordnung eingesetzt werden, welche eine zeitliche Verschiebung einer Messwertfolge bewirken.

Erfindungsgemäß kann die Korrektur des Zeitversatzes bzw. der Phasenverschiebung iterativ, d.h. zyklisch, erfolgen. Dazu kann eine iterative Nachführung der Zeitkonstante $T_{PT1,neu} = T_{PT1,alt} + \Delta T_{PT1}$ jeweils nach einer vorgeben Zykluszeit $T_{DFZyklus}$ des Dynamikfilters vorgenommen werden. Die Zykluszeit $T_{DFZyklus}$ des Dynamikfilters ist dabei vorzugsweise ein ganzzahliges Vielfaches der Tastzeit $T_{DFTast}$ des Dynamikfilters, mit der die Abtastung der Messwerte und gegebenenfalls der Filterwerte, d.h. der durch den Dynamikfilter korrigierten Messwerte, erfolgt. Iterativ vorgenommene Änderungen der Korrektur können in einfacher Weise durch eine Korrektur bzw. Anpassung der Zeitkonstante $T_{PT1,neu} = T_{PT1,alt} + \Delta T_{PT1}$ erreicht werden. Dazu können erfindungsgemäß verschiedene Koeffizienten zur Multiplikation mit dem ermittelten Zeitversatz abhängig davon verwendet werden, ob die Verzögerung der vorauseilenden Messwert- bzw. Filterwertfolge vergrößert oder verkleinert werden muss. Dies erlaubt eine besonders genaue Korrektur der Phasenlage der beiden Messwertfolgen.

Gemäß einer besonders bevorzugten Variante des erfindungsgemäß vorgeschlagenen Verfahrens kann zur iterativen Korrektur der Zeitversatz zwischen dem unkorrigierten, d.h. langsameren bzw. nacheilenden Messwert und dem korrigierten Messwert, d.h. dem aus dem schnelleren, vorauseilenden Messwert gebildeten Filterwert, ermittelt und korrigiert werden. Auf Basis dieses Zeitversatzes erfolgt eine iterative Korrektur, insbesondere durch ein iteratives Nachführen der Zeitkonstante $T_{PT1}$ des Dynamikfilters, die einfach und schnell durch Änderung der entsprechenden Vorgaben für den Filteralgorithmus angepasst werden kann.

Unnötiger Rechenaufwand kann vermieden werden, indem vor Durchführung einer Korrektur des Zeitversatzes überprüft wird, ob eine stationäre Messfolge vorliegt, d.h. ob ein annähernd stationärer Signalzustand detektiert wird. Im Falle einer Anwendung des vorgeschlagenen Verfahrens bei der Heizungsregelung bedeutet dies, dass sich die Heizungsanlage in einem stationären Zustand befindet, in welchem die Vorlauftemperatur innerhalb kürzerer Zeiträume nicht angepasst werden muss. Die Überprüfung auf eine stationäre Messwertfolge kann in einfacher Weise durch Ermittlung der Streuung der Messwerte vorzugsweise des bekannten Referenzmessfühlers erfolgen, beispielsweise durch Bewertung der Differenz des maximalen und des minimalen Messwertes der Messwertfolge während eines vorgegebenen Zeitraums anhand eines Grenzwerts. Als Zeitraum kann sinnvoller Weise die bereits angesprochene Zykluszeit

$T_{DFZyklus}$ des Dynamikfilters angesetzt werden.

Um zuverlässige Ergebnisse zu erhalten, wird eine Detektion bzw. Rekonstruktion der Kennlinie dann nicht durchgeführt, wenn die Messwertfolge nicht stationär und eine Korrektur des Zeitversatzes nicht erfolgreich ist. Zu diesen Zeiten kann dann keine Detektion bzw. Rekonstruktion der Kennlinie durchgeführt werden. Als Kriterium für das Vorliegen einer stationären Messwertfolge kann das vorbeschriebene Verhalten der Messwertfolge herangezogen werden. Ob eine Korrektur des Zeitversatzes erfolgreich war, kann im Rahmen der iterativen Korrektur beispielsweise dadurch festgestellt werden, dass sich die Zeitkonstante $T_{PT1}$ zwischen den Iterationsschritten nicht zu stark ändert ($\Delta T_{PT1} \approx 0$). Eine besonders sichere und daher bevorzugte Beurteilung liegt darin, den Zeitversatz zwischen dem unkorrigierten, d.h. langsameren bzw. nacheilenden Messwert und dem korrigierten Messwert, d.h. dem aus dem schnelleren, vorauseilenden Messwert gebildeten Filterwert, zu ermitteln und dessen Betrag mit einem Grenzwert zu vergleichen.

Mit dem zuvor beschriebenen Verfahren wird ein autark arbeitendes Verfahren zur Detektion bzw. Rekonstruktion der Kennlinie eines Messfühlers beschrieben, welches in nahezu allen Zuständen eines Systems in der Lage ist, die Kennlinie eines a priori unbekannten Messfühlers durch Vergleich mit den Messwerten eines Referenzfühlers zu ermitteln, da das vorgeschlagene Verfahren nicht nur bei stationären Messwertfolgen arbeitet, sondern im Falle instationärer bzw. nichtstationärer Messwertfolgen eine Phasenkorrektur zwischen der Messwertfolge und der Referenzmesswertfolge vornimmt. Lediglich wenn dies nicht gelingt, wird die Detektion der Kennlinie nicht durchgeführt.

Entsprechend bezieht sich die Erfindung auch auf eine Vorrichtung mit den Merkmalen des Anspruchs 8 zur Detektion der Kennlinie eines Messfühlers für zeitlich veränderliche Temperaturmesswerte, insbesondere Widerstandsmesswerte eines Temperaturmessfühlers, die in Heizungs- oder Klimaanlagen bzw. deren Regelung verwendet werden. Die Vorrichtung weist ein Kennlinienmodul auf, in dem eine Messwertfolge des Messfühlers und eine Messwertfolge des Referenzmessfühlers erfasst und die einzelnen Messwerte des Messfühlers in Relation zu den jeweils entsprechenden Messwerten des Referenzmessfühlers mit bekannter Kennlinie gesetzt werden. Um dieses Verfahren auch bei nichtstationären Messwertfolgen und unterschiedlichem Zeitverhalten des Messfühlers und des Referenzmessfühlers durchführen zu können, ist dem Kennlinienmodul erfindungsgemäß ein Dynamikfilter vorgeschaltet, der bei einer nichtstationären Messwertfolge des Referenzmessfühlers und/oder des Messfühlers einen möglichen Zeitversatz, respektive eine Phasenverschiebung, zwischen einer Messwertfolge des Messfühlers und einer Messwertfolge des Referenzmessfühlers ermittelt und korrigiert.

Gemäß einer bevorzugten Ausführungsform weist der Dynamikfilter ein Zeitmodul zur Ermittlung des Zeitversatzes zwischen einer ersten Messwertfolge oder Filterwertfolge und einer zweiten Messwertfolge oder Filterwertfolge sowie zur Ermittlung einer Korrekturgröße, insbesondere einer Zeitkonstante $T_{PT1}$, auf. Ferner kann ein Filtermodul zur Anwendung der Korrekturgröße auf einzelne Messwerte mindestens einer der beiden Messwertfolgen vorgesehen sein. Das Zeitmodul und das Filtermodul sind also zur Durchführung des vorbeschriebenen Verfahrens oder Teilen hiervon eingerichtet. Dazu können das Zeitmodul zur Ermittlung des Zeitversatzes bzw. Zeitverzugs und das Filtermodul insbesondere in einem gemeinsamen Mikroprozessor der Vorrichtung implementiert sein.

Weitere Merkmale, Vorteile und Anwendungsmöglichkeiten der vorliegenden Erfindung ergeben sich auch aus der nachfolgenden Beschreibung von Ausführungsbeispielen und der Zeichnung. Dabei bilden alle beschriebenen und/oder bildlich dargestellten Merkmale für sich oder in beliebiger Kombination den Gegenstand der vorliegenden Erfindung, auch unabhängig von ihrer Zusammenfassung in den Ansprüchen oder deren Rückbezügen.

Es zeigen:

Fig. 1    schematisch eine zur Durchführung der Kennliniendetektion bzw. Rekonstruktion eingerichtete Vorrichtung anhand eines schematischen Verfahrensablaufs;

Fig. 2    eine Kreuzkovarianzfunktion zur Ermittlung des Zeitversatzes zweier Messwertfolgen;

Fig. 3    den Zeitversatz $\Delta T_R$ der Messwert- und Filterwertfolgen sowie die Zeitkonstante $T_{PT1}$ als Funktion der Dynamikfilterzyklen für einen ersten Anwendungsfall und

Fig. 4    den Zeitversatz $\Delta T_R$ der Messwert- und Filterwertfolgen sowie die Zeitkonstante $T_{PT1}$ als Funktion der Dynamikfilterzyklen für einen zweiten Anwendungsfall.

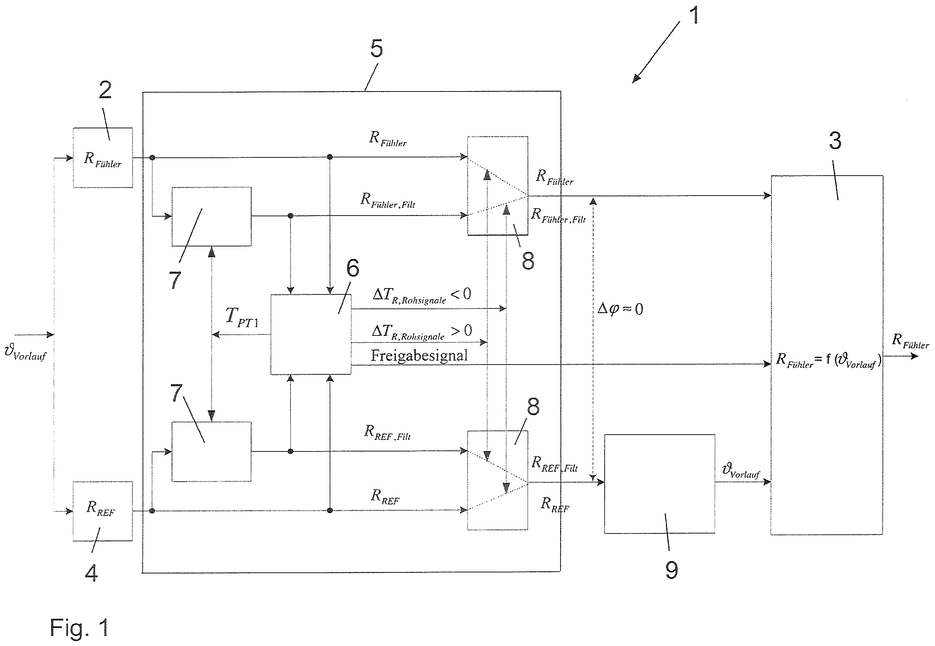

Fig. 1 stellt schematisch eine Vorrichtung 1 zur Detektion bzw. Rekonstruktion der Kennlinie $f(\vartheta)$ eines Messfühlers 2 dar. Der Messfühler 2 misst die Vorlauftemperatur $\vartheta_{Vorlauf}$ einer Heizungsanlage und gibt den Messwert $R_{Fühler}$ als der gemessenen Vorlauftemperatur $\vartheta_{Vorlauf}$ entsprechenden Widerstandswert aus.

Um für eine nicht dargestellte Wärmeadaptionsregelung einer Heizungsanlage diesen Messwert $R_{Fühler}$ in einen Vorlauftemperaturwert $\vartheta_{Vorlauf}$ zu übersetzen bzw. diesen Messwert $R_{Fühler}$ mit einem Korrekturwert zu beaufschlagen, muss die a priori unbekannte Kennlinie $f(\vartheta)$ detektiert bzw. ermittelt (rekonstruiert) werden. Hierfür weist die Vorrichtung 1 ein Kennlinienmodul 3 zur Kennliniendetektion auf, dem neben dem Messwert *Fühler* auch der durch einen Referenzfühler 4 erfasste Messwert $R_{Referenz}$ derselben Vorlauftemperatur $\vartheta_{Vorlauf}$ zugeführt wird. Da die Kennlinie des Referenzmessfühlers 4 bekannt ist, kann das Kennlinienmodul 3 den Messwert $R_{Fühler}$ in Relation zu dem dem Messwert $R_{Referenz}$ entsprechenden Vorlauftemperaturwert $\vartheta_{Vorlauf}$ setzen, um daraus die Widerstands-Temperatur-Kennlinie f($\vartheta$) zu ermitteln. Dazu werden in dem Kennlinienmodul 3 nicht nur einzelne Messwerte $R_{Fühler}$ $R_{Referenz}$ erfasst, sondern Messwertfolgen der mit einer Abtastfrequenz abgetasteten Messfühler 2, 4.

Es ist, wie in Fig. 1 dargestellt, grundsätzlich auch ausreichend, wenn das Kennlinienmodul 3 nur die durch den Referenzmessfühler 4 gemessene Vorlauftemperatur $\vartheta_{Vorlauf}$ übermittelt bekommt. Statt die Auswertung der bekannten Kennlinie in das Kennlinienmodul 3 zu integrieren, ist es daher auch möglich, zwischen dem Dynamikfilter 5 und dem Kennlinienmodul 3 ein Temperaturbestimmungsmodul 9 anzuordnen, das unter Verwendung der genau bekannten Kennlinie des Referenztemperaturfühlers 4 aus dem zugeleiteten Widerstandswert $R_{Referenz}$ die Vorlauftemperatur $\vartheta_{Vorlauf}$ bestimmt und an das Kennlinienmodul ausgibt.

Bei nichtstationären Messwertfolgen, d.h. einem Zustand der Heizungsanlage, in welchem sich die Vorlauftemperatur $\vartheta_{Vorlauf}$ kurzfristig mit der Zeit ändert, kann es aufgrund eines unterschiedlichen Zeitverhaltens und/oder Wärmeübergangs an der Messstelle des Messfühlers 2 und des Referenzmessfühlers 4 zu einem Zeitversatz $\Delta T_{R,Rohsignale}$ der Messwertfolgen des Messfühlers 2 und des Referenzmessfühlers 4 kommen. Unkorrigiert würde dies dazu führen, dass das Kennlinienmodul falsche Messwerte $R_{Fühler}$ und $R_{Referenz}$ (bzw. $\vartheta_{Vorlauf,Referenz}$) zur Ermittlung der Kennlinie $f(\vartheta)$ miteinander korreliert. Um dies zu vermeiden, ist dem Kennlinienmodul 3 ein Dynamikfilter 5 vorgeschaltet, welcher den Zeitversatz $\Delta T_R$ zwischen einer Messwertfolge des Messfühlers 2 und einer Messwertfolge des Referenzmessfühlers 4 ermittelt und korrigiert, d.h. die Phasenverschiebung zwischen den Messwertfolgen durch Korrektur der Messwertfolgen beseitigt.

Das dazu vorgeschlagene Verfahren ist in Fig. 1 schematisch innerhalb des den Dynamikfilter 5 darstellenden Kastens wiedergegeben.

Die am Beispiel einer Vorlauftemperaturbestimmung an einem Heizkessel nachfolgend detailliert beschriebene Kennliniendetektion umfasst die Rekonstruktion bzw. Detektion einer a priori unbekannten Widerstandskennlinie $f(\vartheta)$ eines an dem Heizkessel angebrachten Messfühlers 2, der einen der im Bereich des Messfühlers 2 herrschenden Vorlauftemperatur $\vartheta_{Vorlauf}$ entsprechenden Widerstandswert $R_{Fühler}$ misst und mit einem Widerstandswert $R_{Referenz}$ (bzw. $\vartheta_{Vorlauf,Referenz}$) eines Referenzmessfühlers 4 vergleicht, welcher auch die Vorlauftemperatur $\vartheta_{Vorlauf}$ zur gleichen Zeit und an einen nahegelegenen, d.h. de facto dem gleichen, Messort erfasst. Die Kennliniendetektion erfordert entweder stationäre Verhältnisse der gemessenen Widerstandswerte $R_{Fühler}$ und $R_{Referenz}$ des Messfühlers 2 bzw. des Referenzfühlers 4 oder annähernde Phasengleichheit der Messfolgen der Widerstandswerte.

Ziel des Dynamikfilters 5 ist es zunächst festzustellen, ob ein stationärer Zustand oder eine annähernde Phasengleichheit zwischen den Messwerten des Messfühlers 2 und des Referenzmessfühlers 4 herrscht. In diesem Fall werden die Messwerte nicht beeinflusst und an das Kennlinienmodul weitergeleitet. Im Falle einer nichtstationären Messwertfolge und eines Phasenunterschieds zwischen den Messwertfolgen des Messfühlers 2 und des Referenzmessfühlers 4 soll eine Phasengleichheit der Messwertfolgen in annähernder Weise erreicht werden. Sofern eine Korrektur erfolgreich war, gibt der Dynamikfilter 5 die Kennliniendetektion durch ein Freigabesignal an das Kennlinienmodul 3 frei und schaltet die phasenkorrigierten Messwerte auf das Kennlinienmodul 3 auf.

In einem ersten Verfahrensschritt erfasst das Zeitmodul 6 zur Ermittlung des Zeitversatzes $\Delta T_{R,Rohsignale}$ zwischen dem Referenzmessfühler 4 und dem Messfühler 2 die unkorrigierten Widerstandswerte $R_{Referenz}$ und $R_{Fühler}$. Aus diesen Messwerten wird anschließend entweder ein annähernd stationärer Signalzustand detektiert oder der vorzeichenbehaftete Zeitverzug bzw. Zeitversatz $\Delta T_{R,Rohsignale}$ der unkorrigierten Messwertfolgen ermittelt. In dem vorgeschlagenen Beispiel erfolgt dies durch eine Kovarianzberechnung.

Falls kein stationärer Signalzustand erkannt wurde, wird aus dem Zeitversatz $\Delta T_{R,Rohsignale}$ der unkorrigierten Messwertfolgen eine erste Schätzung für eine Zeitkonstante $T_{PT1}$ eines Filtermoduls 7 gebildet, das auf die Widerstandswerte $R_{Fühler}$, $R_{Referenz}$ der Messwertfolgen mit dem Ziel einwirkt, die Widerstandswerte der vorauseilenden (schnelleren) Messwertfolge zu verlangsamen. Sobald der erste Schätzwert für die Zeitkonstante $T_{PT1}$ vorliegt, wird das Filtermodul 7 für die Widerstandswerte der vorauseilenden Messwertfolge des Referenzmessfühlers 4 oder des Messfühlers 2 aktiviert. Dadurch liegen zumindest die Messwerte der ursprünglich vorauseilenden Messwertfolge auch als korrigierte Messwerte bzw. Filterwerte $R_{Filt}$ vor. Da das Filtermodul 7 die Zeitkonstante $T_{PT1}$ nun auf jeden Messwert des Messfühlers 2 und/oder des Referenzmessfühlers 4 anwendet, wird von einer Filterung der Messwerte $R_{Fühler}$, $R_{Referenz}$ gesprochen. In dem Dynamikfilter 5 liegen neben einem korrigierten Messwert $R_{Filt}$ für den Messwert $R_{Fühler}$ des Messfühlers 2 und/oder den Messwert $R_{Referenz}$ des Referenzmessfühlers 4 in jedem Fall auch die unkorrigierten Messwerte $R_{Fühler}$ und $R_{Referenz}$ zur Erfassung durch das Zeitmodul 6 vor.

In dem nächsten Verfahrensschritt prüft das Zeitmodul 6 nach Anwendung der in dem vorhergehenden Zyklus ermittelten Zeitkonstanten $T_{PT1}$, ob inzwischen ein annähernd phasengleicher Zustand für die korrigierten Messwertfolgen vorliegt. Falls nicht, ermittelt es nun mittels Kovarianzberechnung oder anderer geeigneter mathematischer Verfahren den vorzeichenbehafteten Zeitversatz $\Delta T_{R,Filt}$, nun zwischen dem unkorrigierten Widerstandswert der nacheilenden (langsameren) Messwertfolge und dem korrigierten, mit der Zeitkonstante $T_{PT1}$ verzögerten Widerstandswerte der

vorauseilenden (schnelleren) Messwertfolge. Wird ein weiterer Zeitversatz $\Delta T_{R,Filt}$ der bereits filterkorrigierten Messwertfolgen festgestellt, bedeutet dies, dass die Zeitkonstante $T_{PT1}$ noch nicht geeignet ist, eine Phasengleichheit der Messwertfolgen herzustellen. Daher wird die Zeitkonstante $T_{PT1}$ des Filtermoduls 7 iterativ nachgeführt, bspw. durch eine Korrektur $T_{PT1,neu} = T_{PT1,alt} + \Delta T_{PT1}$, wobei $\Delta T_{PT1}$ auf der Basis des weiteren Zeitversatzes $\Delta T_{R,Filt}$ bestimmt wird.

Diese iterative Nachführung wird zyklisch mit der Zykluszeit $T_{DFZyklus}$ des Dynamikfilters 5 durchgeführt, die ein ganzzahliges Vielfaches der Tastzeit $T_{DFTast}$ des Dynamikfilters 5 ist, mit der das Zeitmodul 6 die korrigierten und ggf. auch die unkorrigierten Messwerte abtastet und den Zeitversatz $\Delta T_R$ ermittelt.

In den Zyklen des Dynamikfilters 5 erfolgt also eine iterative Nachführung der Zeitkonstante $T_{PT1}$ des Filters 7, mit dessen Hilfe der unkorrigierte Messwert $R_{Fühler}$ oder $R_{Referenz}$ der vorauseilenden Messwertfolge des Messfühlers 2 oder des Referenzmessfühlers 4 solange verzögert wird, bis der Zeitversatz $\Delta T_{R,Filt}$ kleiner als ein vorgegebener Grenzwert ist, d.h. annähernd Phasengleichheit vorliegt.

Die annähernd phasengleichen Messwertsignale $R_{Fühler}$, $R_{Referenz,Filt}$ bzw. $R_{Referenz}$, $R_{Fühler,Filt}$ werden dann dem Kennlinienmodul 3 ggf. unter Zwischenschaltung des Temperaturbestimmungsmoduls 9 zusammen mit einem Freigabesignal zugeführt, so dass das Kennlinienmodul 3 aufgrund der zugeführten Messwerte des Messfühlers 2 und des Referenzmessfühlers 4 die Detektion der Kennlinie $f(\vartheta)$ durchführen kann. Als Ergebnis gibt das Kennlinienmodul 3 den Widerstandswert $R_{Fühler}$ als Funktion der Vorlauftemperatur $\vartheta_{Vorlauf}$ aus.

Zur Auswahl des geeigneten Messwertpaares ist in dem Dynamikfilter 5 ein Auswahlmodul 8 vorgesehen, das ausgehend von dem Vorzeichen des Zeitversatzes $\Delta T_{R,Rohsignale}$ der unkorrigierten Messwertfolgen die geeigneten Messwertpaare von korrigiertem und unkorrigiertem Messwert zur Ausgabe an das Kennlinienmodul 3 auswählt.

Die zuvor erwähnte Kovarianzberechnung in jedem Zyklus des Dynamikfilters 5 kann durch eine Berechnung einer Kreuzkovarianzfunktion $R$ erfolgen, die sowohl für die ungefilterten (unkorrigierten) als auch die gefilterten (korrigierten) Widerstandswertepaare $R_{Fühler}$, $R_{Referenz}$ bzw. $R_{Fühler,Filt}$, $R_{Referenz, Flit}$ vorgenommen wird, wobei im Falle eines gefilterten Widerstandswerts die Kreuzkovarianzfunktion $R$ mit den verzögerten (korrigierten) Signalen des einen und den nicht verzögerten (unkorrigierten) Signalen des anderen berechnet wird.

Um die Nomenklatur nachfolgend zu vereinfachen, werden für die Messwerte $R_{Referenz}$ bzw. im gefilterten Fall $R_{Referenz,Filt}$ des Referenzmessfühlers 4 die Größe "x" und die Messwerte $R_{Fühler}$ bzw. $R_{Fühler,Filt}$ des Messfühlers 2 die Größe "y" verwendet. Für diese Signale x und y gelten dann die folgenden Beziehungen:

$$R_{xy}(m) = \frac{1}{N} \sum_{n=1}^{N} (x(n) - \overline{x}) \cdot (y(n+m) - \overline{y}), \quad m = 0...(M-1)$$

$$R_{yx}(m) = \frac{1}{N} \sum_{n=1}^{N} (y(n) - \overline{y}) \cdot (x(n+m) - \overline{x}), \quad m = 0...(M-1)$$

mit den Mittelwerten

$$\overline{x} = \frac{1}{N} \sum_{n=1}^{N} x(n)$$

und

$$\overline{y} = \frac{1}{N} \sum_{n=1}^{N} y(n).$$

$R_{xy}$ ist die Kreuzkovarianzfunktion für den semipositiven Definitionsbereich (positiver Zeitversatz) und $R_{yx}$ die Kreuzkovarianzfunktion für den seminegativen Definitionsbereich (negativer Zeitversatz). $M$ ist die Anzahl der Stützstellen sowohl der Kreuzkovarianzfunktion $R_{xy}$ als auch der Kreuzkovarianzfunktion $R_{yx}$. Der Laufindex $m = 0...(M-1)$ gibt daher die Verschiebung der beiden Signale wieder. Der Laufindex $n$ beschreibt den Abtast-Zeitpunkt innerhalb des Zyklus des Dynamikfilters 5. $N$ bedeutet die Anzahl der Widerstandswerte und entspricht der Tasttiefe des Dynamikfilters 5.

Durch Zusammensetzen ergibt sich die zusammengesetzte Kreuzkorvarianzfunktion

$$R(m\_cc) = [R_{yx} \; R_{xy}], \quad m\_cc = -(M-1)...0...+(M-1).$$

Der Stützstellenindex *m_cc* deckt die Stützstellen der zusammengesetzten Kreuzkovarianzfunktion *R* ab.

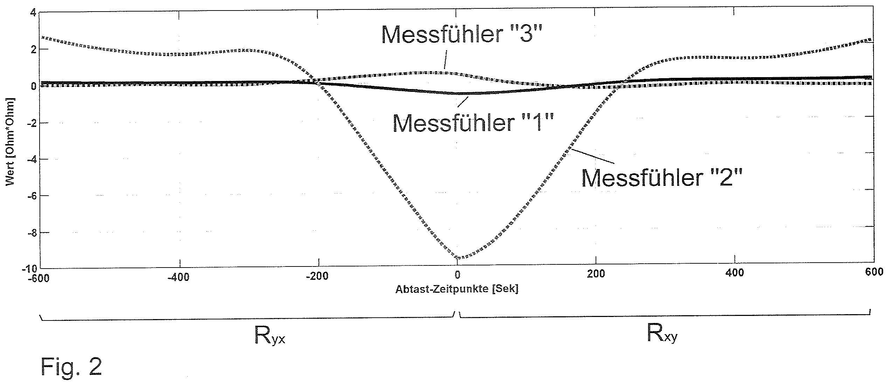

Beispiele für die zusammengesetzte Kreuzkovarianzfunktion *R* sind in Fig. 2 dargestellt, wobei der Wertebereich der positiven Abtast-Zeitpunkte durch die Kreuzkovarianzfunktion $R_{xy}$ und der Wertebereich der negativen Abtast-Zeitpunkte durch die Kreuzkovarianzfunktion $R_{yx}$ gebildet wird. Gegen die Abtast-Zeitpunkte, umgerechnet in Sekunden, sind aus den Widerstandswerten abgeleitete Funktionswerte aufgetragen, welche durch die Messfühler 2 und Referenzmessfühler 4 vorgegeben sind. Dargestellt sind insgesamt drei Kreuzkovarianzfunktionen R für drei verschiedene Messfühler 2 relativ zu einem Referenzmessfühler 4.

Der Zeitversatz $\Delta T_R$ der Messwertfolgen, d.h. zwischen den Signalen x und y, ergibt sich aus der Lage des Extremums (Maximum bzw. Minimum der Kreuzkovarianzfunktion *R*) der unkorrigierten oder korrigierten Messwerte. Da im Vorfeld nicht bekannt ist, ob sich die Phasenverschiebung aus der Lage des Maximums oder Minimums der Kreuzkovarianzfunktion *R* ergibt, müssen sowohl die Lage des Maximums als auch die Lage des Minimums bestimmt werden. Die Lage des Maximums bzw. Minimums ergibt dann den Zeitversatz $\Delta T_{R,Rohsignale}$ bzw. $\Delta T_{R,Filt}$ der unkorrigierten bzw. korrigierten Messwertfolgen. In dem in Fig. 2 dargestellten Beispiel liegt das Maximum des Messwertfühlers "2" bei dem Abtast-Zeitpunkt 0, d.h. dass die Signale des Referenzmessfühlers und des Messfühlers phasengleich sind. Für den Messfühler "1" liegt ein Minimum etwa bei dem Abtast-Zeitpunkt +10. Dies bedeutet, dass der Referenzmessfühler schneller ist als der Messfühler "1", d.h. also der Messfühler "1" langsamer ist. Bei dem Messfühler "3" ergibt sich ein Maximum etwa bei dem Abtast-Zeitpunkt -20, was bedeutet, dass der Messfühler "3" schneller ist als der Referenzmessfühler.

Aus dem so ermittelten Zeitversatz $\Delta T_R$ der Messwertfolgen wird in einem ersten Iterationsschritt aus dem Zeitversatz $\Delta T_{R,Rohsignale}$ der unkorrigierten Messwertfolgen eine Abschätzung der Zeitkonstante $T_{PT1}$ des Filtermoduls 7 wie folgt bestimmt:

$$T_{PT1} = k_{PT1\_inc} \cdot \left| \Delta T_{R,Rohsignale} \right|.$$

Diese Zeitkonstante $T_{PT1}$ wird anschließend in dem Filtermodul 7 angewendet, so dass in folgenden Iterationsschritten sowohl der Zeitversatz $\Delta T_{R,Rohsigale}$ der unkorrigierten Messwertfolgen als auch der Zeitversatz $\Delta T_{R,Filt}$ der korrigierten Messwertfolgen ermittelt werden. Falls $\Delta T_{R,Filt}$ und $\Delta T_{R,Rohsignale}$ ungleich Null sind und die Vorzeichen von $\Delta T_{R,Rohsignale}$ und $\Delta T_{R,Filt}$ gleich sind, gilt:

$$T_{PT1,neu} = T_{PT1,alt} + k_{PT1\_inc} \cdot \left| \Delta T_{R,Filt} \right|.$$

Dies bedeutet, dass die vorauseilende und bereits verzögerte Messwertfolge immer noch zu schnell ist und weiter verzögert werden muss.

Falls dagegen $\Delta T_{R,Filt}$ und $\Delta T_{R,Rohsignale}$ ungleich Null sind und die Vorzeichen von $\Delta T_{R,Rohsignale}$ und $\Delta T_{R,Filt}$ ungleich sind, gilt:

$$T_{PT1,neu} = T_{PT1,alt} - k_{PT1\_red} \cdot \left| \Delta T_{R,Filt} \right|.$$

In diesem Fall wurde die vorauseilende Messwertfolge zu stark verzögert und die Zeitkonstante $T_{PT1}$ muss reduziert werden. Die Koeffizienten $k_{PT1\_inc}$ und $k_{PT1\_red}$ zur Inkrementierung bzw. Reduktion der Zeitkonstante sind vorzugsweise Konstanten, können aber auch als Funktion beispielsweise des Zeitversatzes $\Delta T_R$ ausgestaltet sein.

Um unverhältnismäßig große oder kleine Zeitkonstanten $T_{PT1}$ zu vermeiden, können Ober- bzw. Untergrenzen für die Zeitkonstante $T_{PT1}$ eingeführt werden. Sobald die Zeitkonstante $T_{PT1}$ die Obergrenze über- bzw. die Untergrenze unterschreitet, wird das erfindungsgemäß vorgeschlagene Verfahren in dem Dynamikfilter 5 neu gestartet.

In dem Filtermodul 7 kann der Filter wie folgt implementiert werden:

$$y(k+1) = a_{PT1} \cdot y(k) + b_{PT1} \cdot u(k),$$

wobei *u(k)* das abgetastete Eingangssignal, d.h. der unkorrigierte Messwert $R_{Fühler}$ bzw. $R_{Referenz}$ (Widerstandsrohwert), ist und *y(k)* das zeitdiskrete, gefilterte Ausgangssignal, d.h. der verzögerte Widerstandswert, ist.

Die Filterkoeffizienten $a_{PT1}$ und $b_{PT1}$, können wie folgt berechnet werden:

$$a_{PT1} = \exp\left[-\left(\frac{T_{Tast}}{T_{PT1}}\right)\right] \text{ und } b_{PT1} = 1 - a_{PT1},$$

wobei $T_{Tast}$ die Tastzeit ist, mit denen der jeweilige Widerstandswert (Messwert des Messfühlers bzw. Filterwert des Filtermoduls), abgetastet werden.

Damit die Filterung in dem Filtermodul 7 in Angriff genommen wird, müssen die Rohsignale der Widerstandswerte ausreichend dynamisch sein, d.h. das Stationaritäts-Kriterium:

$$\max\left(R_{Referenz}\right) - \min\left(R_{Referenz}\right) > \Delta R_{Stat}$$

wird nicht erfüllt, wobei $\Delta R_{Stat}$ ein Maximalwert für die Widerstandsänderung ist, der geeignet vorgegeben wird. Vorzugsweise wird zur Feststellung der Referenzmessfühler verwendet.

Nach einer erfolgreichen Filterung, mit der eine Phasenverschiebung korrigiert wurde, bzw. bei Vorliegen eines stationären Systemzustands kann die Kennliniendetektion in dem Kennlinienmodul 3 durchgeführt werden. Dazu kann das Zeitmodul 6 ein Freigabesignal an das Kennlinienmodul 3 senden, wenn die Widerstandswerte ausreichend stationär sind, d.h. das vorerwähnte Stationaritäts-Kriterium erfüllt wird. Auch wenn der Zustand nicht ausreichend stationär ist, die Messwertfolgen aber im dynamischen Betrieb durch die Filterung ausreichend phasengleich sind, d.h. das Kriterium:

$$\left|\Delta T_{R,Filt}\right| \leq \Delta T_{R,Grenz}$$

erfüllt ist, kann das Freigabesignal ausgegeben werden. $\Delta T_{R,Grenz}$ stellt dabei einen geeignet vorgegebenen Grenzwert dar.

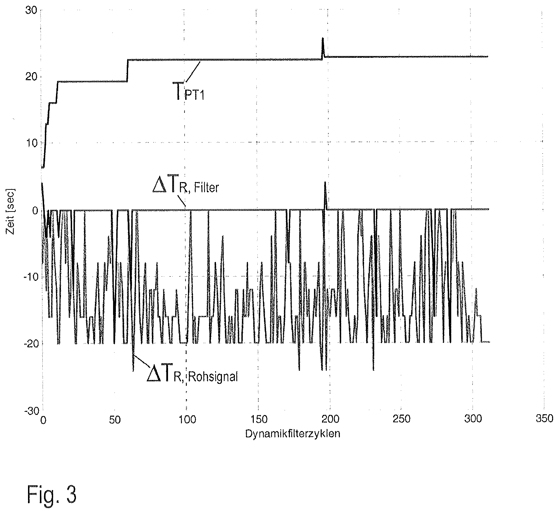

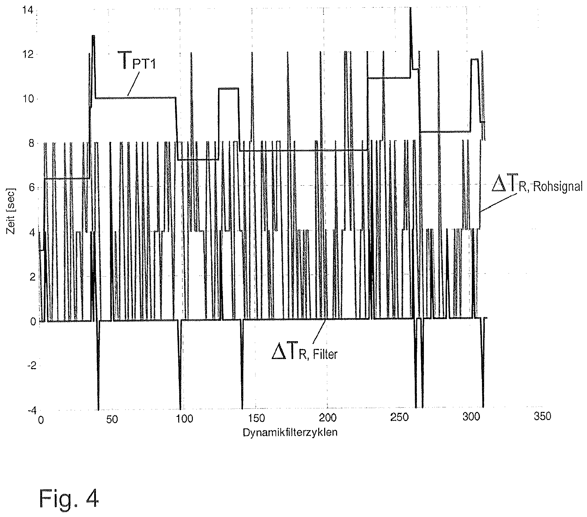

Fig. 3 und 4 zeigen das Ergebnis der erfindungsgemäßen Dynamikfilterung für die Messfühler "2" und Messfühler "1" aus Fig. 2.

Dargestellt sind der in jedem von insgesamt 300 Zyklen des Dynamikfilters 5 aufgetrete Zeitversatz $\Delta T_{R,Rohsignale}$ der unkorrigierten Messsignale, der Zeitversatz $\Delta T_{R,Filt}$ der korrigierten (gefilterten) Messsignale und die dafür angewendete Zeitkonstante $T_{PT1}$.

Wie insbesondere dem Verlauf des Zeitversatzes $\Delta T_{R,Filt}$ zu entnehmen ist, kann mit dem vorgeschlagenen Verfahren eine ausreichende Phasengleichheit (Zeitversatz von nahezu Null) erreicht werden, so dass die Signale auch bei unterschiedlichem Ansprechverhalten der Messfühler 2 und der Referenzmessfühler 4 zur Kennliniendetektion herangezogen werden können.

**Bezugszeichenliste:**

| | |
|---|---|
| 1 | Vorrichtung zur Detektion bzw. Rekonstruktion einer Kennlinie |
| 2 | Messfühler |
| 3 | Kennlinienmodul |
| 4 | Referenzmessfühler |
| 5 | Dynamikfilter |
| 6 | Zeitmodul (Modul zur Ermittlung der Zeitkonstante) |
| 7 | Filtermodul |
| 8 | Auswahlmodul |
| 9 | Temperaturbestimmungsmodul |
| $T_{PT1}$ | Zeitkonstante des Filtermoduls, Korrekturgröße |
| $k_{PT1\_inc}$ | Koeffizient zur Inkrementierung der Zeitkonstante |
| $k_{PT1\_red}$ | Koeffizient zur Reduktion der Zeitkonstante |
| $R_{Fühler}$ | Messwert des Messfühlers, Widerstandswert |
| $R_{Referenz}$ | Messwert des Referenzmessfühlers, Widerstandswert |
| $R_{Filt}$ | Korrigierter Messwert, Filterwert |

| | |
|---|---|
| $\Delta T_R$ | Zeitversatz der Messwertfolgen |
| $\Delta T_{R,Rohsignale}$ | Zeitversatz der unkorrigierten Messwertfolgen |
| $\Delta T_{R,Filt}$ | Zeitversatz der korrigierten Messwertfolgen |
| $\vartheta_{Vorlauf}$ | Vorlauftemperatur |
| $f(\vartheta)$ | Kennlinie des Messfühlers |
| $T_{DFZyklus}$ | Zykluszeit des Dynamikfilters |
| $T_{DFTast}$ | Tastzeit des Dynamikfilters |
| $R$ | Kreuzkovarianzfunktion |
| $R_{xy}$ | Kreuzkovarianzfunktion für den semipositiven Definitionsbereich |
| $R_{yx}$ | Kreuzkovarianzfunktion für den seminegativen Definitionsbereich |

**Patentansprüche**

1. Verfahren zur Detektion der Kennlinie $f(\vartheta)$ eines Messfühlers (2) für zeitlich veränderliche Temperaturmesswerte, die in Heizungs- oder Klimaanlagen oder deren Regelungen verwendet werden, bei dem eine Messwertfolge des Messfühlers (2) und eine Messwertfolge eines Referenzmessfühlers (4) mit bekannter Kennlinie erfasst und die einzelnen Messwerte des Messfühlers (2) in Relation zu den Messwerten des Referenzmessfühlers (4) gesetzt werden, **dadurch gekennzeichnet, dass** bei einer nichtstationären Messwertfolge ein möglicher Zeitversatz ($\Delta T_{R,Rohsignale}$, $\Delta T_{R,Filt}$) zwischen einer Messwertfolge des Messfühlers (2) und einer Messwertfolge des Referenzmessfühlers (4) ermittelt und korrigiert wird.

2. Verfahren nach Anspruch 1, **dadurch gekennzeichnet, dass** der Zeitversatz ($\Delta T_{R,Rohsignale}$, $\Delta T_{R,Filt}$) aus der Lage eines Extremums einer Kreuzkovarianzfunktion R der beiden Messwertfolgen abgeleitet wird.

3. Verfahren nach Anspruch 1 oder 2, **dadurch gekennzeichnet, dass** der Zeitversatz ($\Delta T_{R,Rohsignale}$, $\Delta T_{R,Filt}$) zur Korrektur herangezogen wird, indem die vorauseilende Messwertfolge verzögert wird.

4. Verfahren nach einem der vorhergehenden Ansprüche, **dadurch gekennzeichnet, dass** die Korrektur iterativ erfolgt.

5. Verfahren nach Anspruch 4, **dadurch gekennzeichnet, dass** zur iterativen Korrektur der Zeitversatz ($\Delta T_{R,Filt}$) zwischen dem unkorrigierten Messwert und dem korrigierten Messwert ermittelt und korrigiert wird.

6. Verfahren nach einem der vorhergehenden Ansprüche, **dadurch gekennzeichnet, dass** vor Durchführung einer Korrektur des Zeitversatzes ($\Delta T_{R,Rohsugnale}$, $\Delta T_{R,Filt}$) überprüft wird, ob eine stationäre Messwertfolge vorliegt.

7. Verfahren nach einem der vorhergehenden Ansprüche, **dadurch gekennzeichnet, dass** die Detektion der Kennlinie $f(\vartheta)$ nicht durchgeführt wird, wenn die Messwertfolge nicht stationär ist und eine Korrektur des Zeitversatzes ($\Delta T_{R,Rohsignale}$, $\Delta T_{R,Filt}$) nicht erfolgreich ist.

8. Vorrichtung zur Detektion der Kennlinie $f(\vartheta)$ eines Messfühlers (2) für zeitlich veränderliche Temperaturmesswerte, die in Heizungs- oder Klimaanlagen oder deren Regelungen verwendet werden, mit einem Kennlinienmodul (3), in dem eine Messwertfolge des Messfühlers (2) und eine Messwertfolge eines Referenzmessfühlers (4) erfasst und die einzelnen Messwerte des Messfühlers (2) in Relation zu den Messwerten des Referenzmessfühlers (4) mit bekannter Kennlinie gesetzt werden, **dadurch gekennzeichnet, dass** dem Kennlinienmodul (3) ein Dynamikfilter (5) vorgeschaltet ist, der bei einer nichtstationären Messwertfolge einen möglichen Zeitversatz ($\Delta T_{R,Rohsignale}$, $\Delta T_{R,Filt}$) zwischen einer Messwertfolge des Messfühlers (2) und einer Messwertfolge des Referenzmessfühlers (4) ermittelt und korrigiert.

9. Vorrichtung nach Anspruch 8, **dadurch gekennzeichnet, dass** der Dynamikfilter (5) ein Zeitmodul (6) zur Ermittlung des Zeitversatzes ($\Delta T_{R,Rohsignale}$, $\Delta T_{R,Filt}$) zwischen einer ersten Messwertfolge und einer zweiten Messwertfolge und einer Korrekturgröße ($T_{PT1}$) und ein Filtermodul (7) zur Anwendung der Korrekturgröße ($T_{PT1}$) auf einzelne Messwerte mindestens einer der beiden Messwertfolgen aufweist.

9

**Claims**

1. A method for detecting the characteristic curve f ($\theta$) of a sensor (2) for time-varying temperature measurements which are used in heating or air-conditioning systems or the control systems thereof, in which a sequence of measurements from the sensor (2) and a sequence of measurements from a reference sensor (4) with a known characteristic curve are collected and the individual measurements from the sensor (2) are set in relation to the measurements from the reference sensor (4), **characterized in that** with a non-stationary sequence of measurements, a possible time offset ($\Delta T_R$, *raw signals,* $\Delta T_{R, filt}$) between a sequence of measurements from the sensor (2) and a sequence of measurements from the reference sensor (4) is determined and corrected.

2. The method according to claim 1, **characterized in that** the time offset ($\Delta T_R$, *raw signals,* $\Delta T_{R, filt}$) is derived from the position of an extremum of a cross-covariance function R of the two measurement sequences.

3. The method according to claim 1 or 2, **characterized in that** the time offset ($\Delta T_{R, raw signals}$, $\Delta T_{R, filt}$) is used for adjustment by delaying the anticipatory measurement value sequence.

4. The method according to one of the preceding claims, **characterized in that** the correction is carried out iteratively.

5. The method according to claim 4, **characterized in that** for the iterative adjustment, the time offset ($\Delta T_{R, filt}$) between the non-adjusted measurement and the adjusted measurement is determined and corrected.

6. The method according to one of the preceding claims, **characterized in that** before an adjustment of the time offset ($\Delta T_{R, raw signals}$, $\Delta T_{R, filt}$) is carried out, a check is to made to see whether a stationary sequence of measurements is present.

7. The method according to one of the preceding claims, **characterized in that** the detection of the characteristic curve $f(\theta)$ is not carried out when the sequence of measurements is not stationary and an adjustment of the time offset ($\Delta T_{R, raw signals}$, $\Delta T_{R, filt}$) is not successful.

8. A device for the detection of the characteristic curve $f(\theta)$ of a sensor (2) for time-varying temperature measurements which are used in heating or air-conditioning systems or the control systems thereof, having a characteristic curve module (3), in which a sequence of measurements from the measuring sensor (2) and a sequence of measurements from a reference sensor (4) are detected and the individual measurements from the measuring sensor (2) are set in relation to the measurements from the reference sensor (4) with a known characteristic curve, **characterized in that** a dynamic filter (5) is inserted upstream of the characteristic curve module (3), which dynamic filter determines and corrects a possible time offset ($\Delta T_{R, raw signals}$, $\Delta T_{R, filt}$) between a sequence of measurements from the sensor (2) and a sequence of measurements from the reference sensor (4) in the case of a non-stationary sequence of measurements.

9. A device according to claim 8, **characterized in that** the dynamic filter (5) has a time module (6) for determining the time offset ($\Delta T_{R, raw signals,}$ $\Delta T_{R, filt}$) between a first sequence of measurements and a second sequence of measurements and an adjustment variable ($T_{PT1}$) and a filter module (7) for the application of the adjustment variable ($T_{PT1}$) to individual measurements of at least one of the two sequences of measurements.

**Revendications**

1. Procédé pour la détection de la courbe caractéristique $f(\vartheta)$ d'un capteur (2) pour des valeurs de mesure de température variables dans le temps, lesquelles sont utilisées dans des installations de chauffage ou de climatisation ou les régulations de celles-ci, dans lequel une séquence de valeurs de mesure du capteur (2) et une séquence de valeurs de mesure d'un capteur de référence (4) avec courbe caractéristique connue sont collectées, et les valeurs de mesure individuelles du capteur (2) étant mises en relation avec les valeurs de mesure du capteur de référence (4), **caractérisé en ce qu'**en cas de séquence de valeurs de mesure non stationnaire, on détermine et corrige un possible décalage dans le temps ($\Delta T_{R,Rohsignale}$, $\Delta T_{R,Flit}$) entre une séquence de valeurs de mesure du capteur (2) et une séquence de valeurs de mesure du capteur de référence (4).

2. Procédé selon la revendication 1, **caractérisé en ce que** le décalage dans le temps ($\Delta T_{R,Rohsignale}$, $\Delta T_{R,Flit}$) est dérivé de la position d'une extrême d'une fonction de covariance croisée R des deux séquences de valeurs de mesure.

**3.** Procédé selon la revendication 1 ou 2, **caractérisé en ce que** le décalage dans le temps ($\Delta T_{R,Rohsignale}$, $\Delta T_{R,Flit}$) est pris en compte pour la correction **en ce que** la séquence de valeurs de mesure en avance est temporisée.

**4.** Procédé selon l'une des revendications précédentes, **caractérisé en ce que** la correction s'effectue itérativement.

**5.** Procédé selon la revendication 4, **caractérisé en ce que**, pour la correction itérative, le décalage dans le temps ($\Delta T_{R,Flit}$) entre la valeur de mesure non corrigée et la valeur de mesure corrigée est déterminé et corrigé.

**6.** Procédé selon l'une des revendications précédentes, **caractérisé en ce qu'**avant la réalisation d'une correction du décalage dans le temps ($\Delta T_{R,Rohsignale}$, $\Delta T_{R,Flit}$), on vérifie s'il y a une séquence de valeurs de mesures stationnaire.

**7.** Procédé selon l'une des revendications précédentes, **caractérisé en ce que** la détection de la courbe caractéristique $f(\vartheta)$ n'est pas effectuée si la séquence de valeurs de mesure n'est pas stationnaire et qu'une correction du décalage dans le temps ($\Delta T_{R,Rohsignale}$, $\Delta T_{R,Flit}$) n'est pas couronnée de succès.

**8.** Dispositif pour la détection de la courbe caractéristique $f(\vartheta)$ d'un capteur (2) pour des valeurs de mesure de température variables dans le temps, lesquelles sont utilisées dans des installations de chauffage ou de climatisation ou les régulations de celles-ci, avec un module de courbe caractéristique (3) dans lequel on collecte une séquence de valeurs de mesure du capteur (2) et une séquence de valeurs de mesure d'un capteur de référence (4) et met en relation les valeurs de mesure individuelles du capteur (2) avec les valeurs de mesure du capteur de référence (4) avec courbe caractéristique connue,
**caractérisé en ce qu'**un filtre dynamique (5) est monté en amont du module de courbe caractéristique (3) lequel, en cas de séquence de valeurs de mesure non stationnaire, détermine et corrige un décalage dans le temps ($\Delta T_{R,Rohsignale}$, $\Delta T_{R,Flit}$) possible entre une séquence de valeurs de mesure du capteur (2) et une séquence de valeurs de mesure du capteur de référence (4).

**9.** Dispositif selon la revendication 8, **caractérisé en ce que** le filtre dynamique (5) présente un module de temps (6) pour la détermination du décalage dans le temps ($\Delta T_{R,Rohsignale}$, $\Delta T_{R,Flit}$) entre une première séquence de valeurs de mesure et une deuxième séquence de valeurs de mesure et une grandeur de correction ($T_{PT1}$) et un module de filtrage (7) pour l'utilisation de la grandeur de correction ($T_{PT1}$) pour des valeurs de mesure individuelles d'au moins l'une des deux séquences de valeurs de mesure.

Fig. 1

EP 2 166 327 B1

Fig. 2

13

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1456727 B1
- DE 102005012597 A1
- DE 102006040409 A1
- DE 102007033754 A1
- EP 1182438 B1